Europäisches Patentamt

European Patent Office

Office européen des brevets

(11) Publication number: **0 353 715 B1**

# EUROPEAN PATENT SPECIFICATION

(45) Date of publication of patent specification: **12.05.93**    (51) Int. Cl.5: **H02M 5/45**, H02M 7/5387

(21) Application number: **89114206.9**

(22) Date of filing: **01.08.89**

(54) **Frequency changer.**

(30) Priority: **04.08.88 JP 195197/88**

(43) Date of publication of application:
**07.02.90 Bulletin 90/06**

(45) Publication of the grant of the patent:
**12.05.93 Bulletin 93/19**

(84) Designated Contracting States:
**DE IT**

(56) References cited:
**DE-A- 2 944 334**
**FR-A- 2 218 688**

(73) Proprietor: **HITACHI, LTD.**
**6, Kanda Surugadai 4-chome**
**Chiyoda-ku, Tokyo 100(JP)**

(72) Inventor: **Nakata, Kiyoshi Yuni Haitsu 202,**
**1-10**
**Higashidaira-1-chome Tomobemachi**
**Nishiibaraki-gun Ibaraki-ken(JP)**
Inventor: **Tanamachi, Tokunosuke**
**3600-455, Nakane**
**Katsuta-shi(JP)**
Inventor: **Nakamura, Kiyoshi**
**2525-524, Mawatari**
**Katsuta-shi(JP)**
Inventor: **Kimura, Akira**
**16-2, Aobacho**
**Katsuta-shi(JP)**
Inventor: **Tsutsui, Yoshio**
**12-1-305, Aobacho**
**Katsuta-shi(JP)**

(74) Representative: **Strehl, Schübel-Hopf,**
**Groening**
**Maximilianstrasse 54 Postfach 22 14 55**
**W-8000 München 22 (DE)**

Rank Xerox (UK) Business Services
(3.10/3.6/3.3.1)

## Description

The present invention relates to a frequency changer for driving a motor by using a converter and an inverter, and in particular to a frequency changer suitable to suppressing a beat phenomenon of a motor current caused by pulsation of DC voltage.

It is known that DC output voltage of a converter for converting AC to DC generally pulsates with a frequency represented as

$$f = 2 \cdot pfs \qquad (1)$$

where p is the number of phases of a power source, and fs is the frequency of the power source. Especially when the power source has a single phase (i.e., $p = 1$), the DC output voltage pulsates with a frequency which is twice that of the power source, and its pulsation width is also extremely large. Even if a smoothing capacitor having large capacitance is disposed, therefore, it is difficult to completely remove this pulsation voltage.

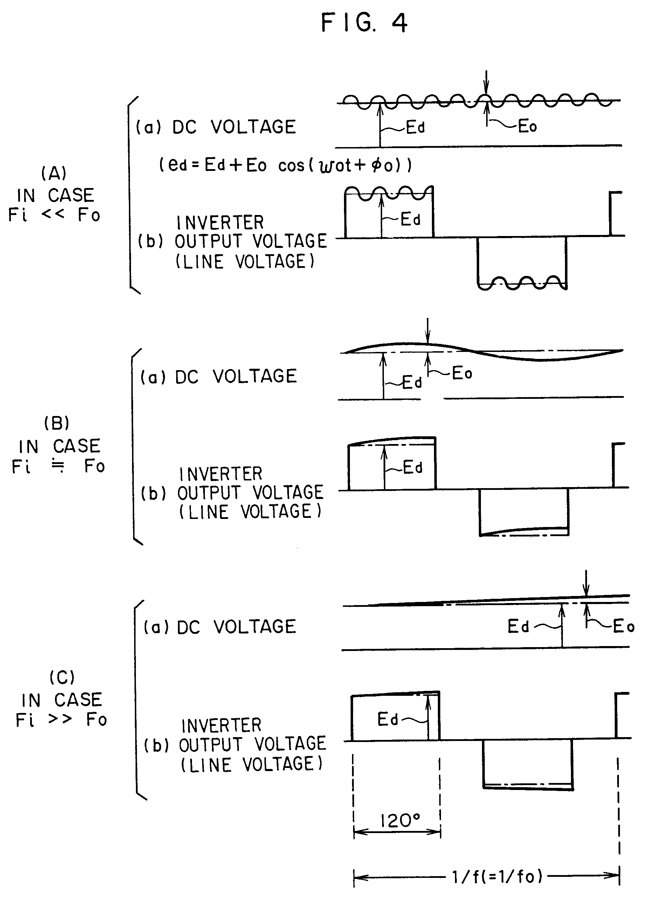

When such a converter is combined with an induction motor drive system using a pulse width modulation inverter (PWM inverter), an undulation phenomenon of a motor current caused by pulsation of DC voltage as shown in Fig. 4, i.e., so–called beat phenomenon is incurred. This beat phenomenon causes problems such as an increase in inverter main circuit component current and generation of torque pulsation of the motor.

Meanwhile, JP–B–61–48356 aims at suppressing the beat by changing the degree of modulation according to the magnitude of DC voltage to adjust the pulse width of the output voltage of the inverter and remove the influence of the pulsation of the DC voltage from the output voltage. This scheme is effective in apparatuses having medium and small capacities in which the carrier frequency can be set at a sufficient value as compared with the pulsation frequency of the DC voltage.

In systems such as electric railways in which power of a large capacity is handled, however, the upper limit of the carrier frequency is limited because of limitation in switching frequency of main circuit components and the like. In case the speed is to be changed over a relatively wide range, therefore, so–called operation in a one–pulse region becomes necessary. In the so–called operation in the one–pulse region, the inverter frequency is equivalent to the carrier frequency, and commutation is performed only twice for each phase in one period. In such a one–pulse region, however, voltage adjustment by using the degree of modulation cannot be performed. Therefore, the above described prior art cannot deal with the operation in the one–pulse region, resulting in a problem.

In a technique described in "117, Switching method for suppressing resonance phenomenon of converter–inverter system", 1987 National Convention Record, IEE of Japan – Industry Application Society –, a DC components (beat component) is minutely changed without changing the AC component (fundamental wave component) by displacing the on/off time of a switching device of each phase of the inverter by a minute time. The minute change components can be represented by the following equations.

$$\left.\begin{array}{l} \Delta u = 0 \\[4pt] \Delta v = C \cos (\Delta\phi + \phi_o) \\[4pt] \Delta w = -C \cos (\Delta\phi + \phi_o) \end{array}\right\} \qquad \cdots\cdots\cdots\cdots (2)$$

The beat component can be reduced by displacing the on/off time by a minute time in accordance with the equation (2). However, means for realizing this is not disclosed.

Further, in a technique described in "Analysis and study of beatless control in inverter driven by pulsation power source", 1988 National Convention Record, IEE of Japan – Industry Application Society –, the beat component can be reduced by comparing, in the one–pulse region, a carrier (such as a triangular wave or a sine wave) having the same frequency as the inverter frequency with a modulated wave having a predetermined amplitude and the beat frequency.

In the above described prior art examples, however, means for realization and, in particular, means for detecting the beat frequency component are not concretely described.

An object of the present invention is to provide a frequency changer having a converter and an inverter in which a beat phenomenon caused by pulsation of DC voltage can be suppressed over the entire frequency region of the inverter by using concrete means for detecting a beat frequency component.

Another object of the present invention is to provide a motor control apparatus using the above described frequency changer.

The invention achieves the above described objects, by a frequency changer as defined in claim 1.

In the configuration according to claim 1, the inverter is driven by the second modulated wave obtained from the modulated wave and the degree of pulsation of DC. Therefore, low frequency undulation which might cause beat is removed from the output voltage of the inverter.

The above and other objects, features and advantages of the present invention will be described hereinafter with respect to the accompanying claims and drawings, in which like reference numerals are used to describe similar parts throughout the several views of the invention, and wherein:

Fig. 1 is a configuration diagram showing an embodiment of the present invention;

Figs. 2 and 3 are waveform diagrams used for explaining the operation of the embodiment shown in Fig. 1;

Fig. 4 is a diagram showing an example of a beat phenomenon;

Fig. 5 is a main circuit concept diagram used for explaining the inverter operation;

Fig. 6 is a diagram used for explaining the operation of Fig. 5 and the concept of a switching function;

Fig. 7 is a diagram showing correspondence relation among the switching function, conductive states of switching devices and gate signals.

The present invention will now be described in detail with respect to the accompanying drawings.

First of all, the principle of removing a beat component contained in the inverter output voltage will now be described.

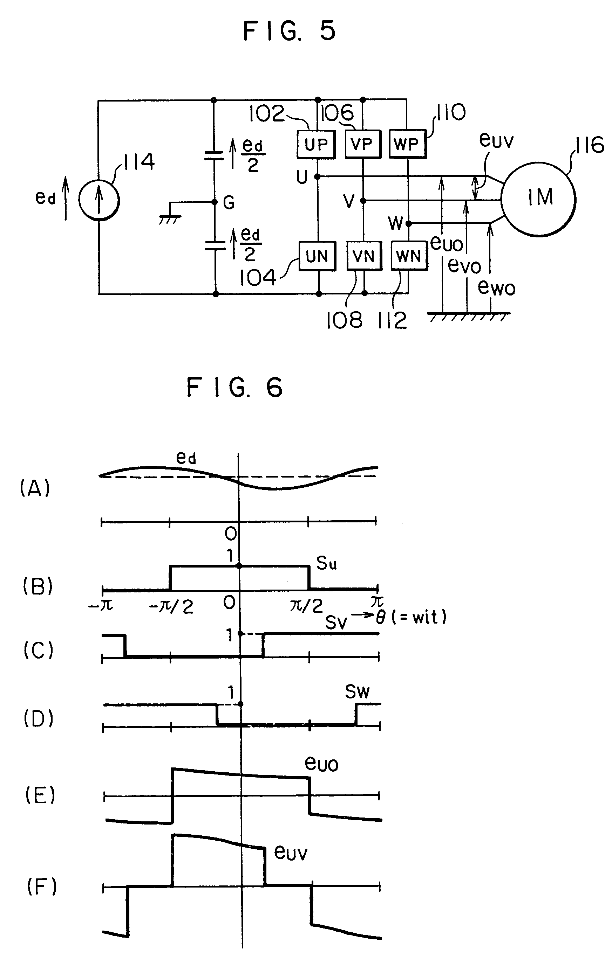

It is now assumed that an inverter has configuration as shown in Fig. 5. In Fig. 5, numerals 102, 104, 106, 108, 110 and 112 denote ideal switches UP to WN, numeral 114 a DC voltage source (including a pulsation voltage source), numeral 116 an induction motor, and G a virtual intermediate point.

Such a function $S_u$ that $S_u = 1$ when UP is on and UN is off and $S_u = 0$ when UP is off and UN is on is introduced. In the same way, functions $S_v$ and $S_w$ are also introduced with respect to phases V and W, respectively. These functions are referred to as switching functions. By using these functions $S_u$, $S_v$ and $S_w$, output terminal voltage $e_{uo}$, $e_{vo}$ and $e_{wo}$ of the inverter (with respect to neutral point voltage) can be represented as

$$\left. \begin{array}{l} e_{uo} = e_d \times (S_u - 1/2) \\[2mm] e_{vo} = e_d \times (S_v - 1/2) \\[2mm] e_{wo} = e_d \times (S_w - 1/2) \end{array} \right] \qquad \cdots \cdots \cdots \cdots \quad (3)$$

where $e_d$ is DC voltage (containing pulsation). In case of one − pulse, for example, $S_u$, $S_v$ and $S_w$ become as shown in Fig. 6(B) to (D), respectively. By multiplying $e_d$ shown in Fig. 6(A) by $S_u$, $e_{uo}$ as shown in Fig. 6(E) is derived.

On the other hand, line voltages can be derived as

$$\left. \begin{array}{l} e_{uv} = e_d \times (S_u - S_v) \\[2mm] e_{vw} = e_d \times (S_v - S_w) \\[2mm] e_{wu} = e_d \times (S_w - S_u) \end{array} \right] \qquad \cdots \cdots \cdots \cdots \quad (4)$$

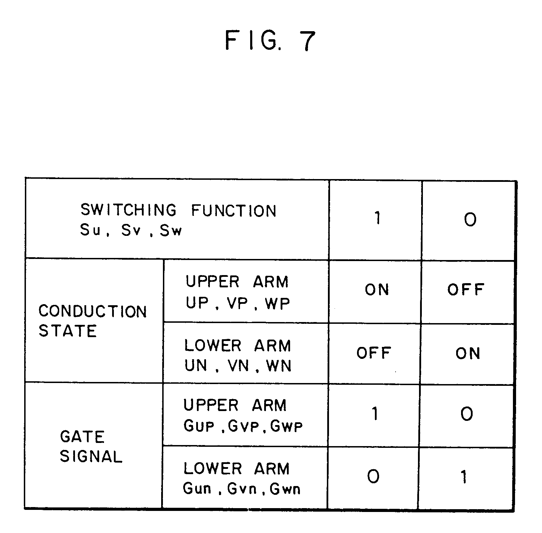

from relations shown in the equation (3). As heretofore described, respective output voltages of the inverter can be described by using the switching functions $S_u$, $S_v$ and $S_w$. As shown in Fig. 7, respective switching functions correspond to gate signals of an upper arm among inverter main circuit devices (i.e., UP to WN of Fig. 5). Once the switching functions are derived, gate signals for obtaining predetermined voltage are immediately defined.

Since the switching functions at the steady state are periodic functions, Fourier expansion can be applied to them and they can be represented as

$$S_u = \frac{1}{2} + A_1 \cos \theta + \sum_{n=3,5,7\cdots}^{\infty} An \cos n\theta$$

$$S_v = \frac{1}{2} + A_1 \cos (\theta - \frac{2x}{3}) + \sum_{n=3,5,7\cdots}^{\infty} An \cos n(\theta - \frac{2x}{3})$$

$$S_w = \frac{1}{2} + A_1 \cos (\theta + \frac{2x}{3}) + \sum_{n=3,5,7\cdots}^{\infty} An \cos n(\theta + \frac{2x}{3})$$

$$\cdots\cdots\cdots \quad (5)$$

where

$A_1$ = fundamental wave component

$An$ = $n-$th harmonic component.

By substituting $\theta = wit$ (where wi is the angular frequency of the inverter) into the equation (5) and then substituting the resultant equation (5) into the equation (3), therefore, respective output terminal voltages of the inverter can be represented as

$$\left. \begin{array}{l} e_{uo} = A_i e_d \cos wit + e_{uh} \\ \\ e_{vo} = A_1 e_d \cos (wit - \frac{2x}{3}) \; e_{vh} \\ \\ e_{wo} = A_1 e_d \cos (wit + \frac{2x}{3}) \; e_{wh} \end{array} \right] \quad \cdots\cdots \quad (6)$$

where

$$e_{uh} = e_d \sum_{n=3,5,7\cdots}^{\infty} An \cos n\, wit$$

$$e_{vh} = e_d \sum_{n=3,5,7\cdots}^{\infty} An \cos n\, (wit - \frac{2x}{3})$$

$$e_{wh} = e_d \sum_{n=3,5,7\cdots}^{\infty} An \cos n\, (wit + \frac{2x}{3}) \; .$$

Neglecting all harmonics other than the fundamental wave contained in the pulsation of the output voltage (DC voltage) of the converter, it is now assumed that the DC voltage is represented as

$$e_d = E_d + E_o \cos (w_o t + \phi_o) \quad (7)$$

4

where

$E_d$ = average value of DC voltage
$E_o$ = amplitude of pulsation voltage
$w_o$ = angular frequency of pulsation
$\phi_o$ = phase of pulsation voltage.

From the relations of the equation (6), the output terminal voltage $e_{uo}$ of the U phase becomes

$$
\begin{aligned}
e_{uo} &= A_1 \{E_d + E_o \cos(w_o t + \phi_o)\} \cos w_i t + e_{uh} \\
&= A_1 E_d \cos w_i t \\
&\quad + \frac{A_1 E_0}{2} \cos \{(w_o + w_i)t + \phi_o\} \\
&\quad + \frac{A_1 E_0}{2} \cos \{(w_o - w_i)t + \phi_o\} \\
&\quad + e_{uh} \qquad\qquad \cdots\cdots\cdots (8)
\end{aligned}
$$

In the right side of the equation (8), a first term represents the fundamental wave component, and a second term and a third term represent components generated by pulsation of DC voltage, whereas $e_{uh}$ represents other harmonic components.

Assuming now that the inverter frequency approaches the pulsation frequency of the DC voltage, it will be appreciated that the third term component of the right side of the equation (8) becomes extremely low in frequency. Since such voltage is applied to an induction motor which exhibits low impedance with respect to low frequencies, a low frequency current having a large amplitude superposed on a normal current flows, beat being thus caused. On the other hand, the voltage component of the fourth term included in the right side of the equation (8) does not exert a great influence because its frequency is relatively high and its amplitude is small. Further, the component of the second term included in the right side has a high frequency. In case the load is a motor, therefore, the impedance with respect to the second term component becomes large and the influence of the second term component is small.

Switching functions for removing the component of the third term on the right side of the equation (8), i.e., voltage component of a frequency equivalent to the difference between the pulsation frequency and the inverter frequqncy (hereafter referred to as beat component) will now be described.

The beat component can be removed from the output voltage of the inverter by adding the component to be removed to the switching functions of the inverter.

It is now assumed that the switching function $S_u$ of U phase is represented as

$$S_u = \tfrac{1}{2} + A_1 \cos w_i t + \Delta S_u \qquad (9)$$

where $\Delta S_u$ is a component for removing the beat component. At this time, the output terminal voltage in case the DC voltage is represented by the equation (7) can be represented by the following equation.

$$e_{uo} = A_1 E_d \cos wit$$

$$+ \frac{A_1 E_0}{2} \cos \{(w_o + w_i)t + \phi_o\}$$

$$+ \frac{A_1 E_0}{2} \cos \{(w_o - w_i)t + \phi_o\}$$

$$+ \Delta S_u \cdot E_d$$

$$+ \Delta S_u \cdot E_0 \cos (w_{ot} + \phi_o) \qquad \cdots\cdots\cdots (10)$$

By defining $\Delta S_u$ as

$$\Delta S_u = -\Delta A \cos \{(w_o - w_i)t + \phi_o\} \qquad (11)$$

where

$$\Delta A = \frac{A_1 E_0}{2E_d} \quad ,$$

$e_{uo}$ can be represented as

$$e_{uo} = A_1 E_d \cos wit + \frac{A_1 E_d}{2} \cos \{(w_o + w_i)t + \phi_o\}$$

$$+ \Delta e_{uo} \qquad\qquad \cdots\cdots\cdots (12)$$

where

$$\Delta e_{uo} = -\frac{A_1 E_o^2}{2E_d} \cos \{(w_o - w_i)t + \phi_o\} \cos (w_o t + \phi_o).$$

The beat component is thus removed. Even if $\Delta e_{uo}$ is neglected in the equation (12), there is no problem because $\Delta e_{uo}$ is usually sufficiently small as compared with the fundamental wave.

In the same way, by letting $S_v$ and $S_w$ be

$$S_v = \frac{1}{2} + A_1 \cos (wit - \frac{2x}{3}) + \Delta S_v$$

$$\cdots\cdots\cdots (13)$$

$$S_w = \frac{1}{2} + A_1 \cos (wit + \frac{2x}{3}) + \Delta S_w$$

where

$$\Delta S_v = -\Delta A \cos \{(w_o - w_i)t + \phi_o + \frac{2x}{3}\}$$

$$\Delta S_w = -\Delta A \cos \{(w_o - w_i)t + \phi_o - \frac{2x}{3}\}$$

$$\Delta A = \frac{A_1 E_0}{2E_d} \, ,$$

the beat component can be removed from each phase terminal voltage. It is a matter of course that the beat component is removed from the inverter output line voltage as well.

If switching of the inverter is performed so that the above described beat removing component may be included, the beat component is removed from the output line voltage of the inverter. However, it is difficult to create means for realizing a switching pattern including this component.

The way of thinking will now be described and then concrete means will be described by referring to drawings.

In a pulse width modulation control scheme, pulses are generally derived by comparing the carrier such as a triangular wave with a modulated wave such as a sine wave. If pulses obtained by this scheme are expanded into Fourier series, the pulses are resolved into a fundamental wave component proportionate to the amplitude of the modulated wave and a harmonic component of the carrier frequency. If thc degree of modulation is minutely changed in case the amplitude of the modulated wave (degree of modulation) is smaller than unity (i.e., in a multipulse region), the fundamental wave component changes in proportion to the degree of modulation. However, the harmonic component does not change but remains nearly constant.

Paying attention to this point, the case of one – pulse region will now be described. In the one – pulse region, correction for the beat component cannot be performed because the degree of modulation is unity. Assuming now that the above described harmonic component is the fundamental wave component when the one – pulse region is used and the above described fundamental wave component is the beat removing component when the one – pulse region is used, the fundamental wave component changes in proportion to the degree of modulation. Therefore, correction can be performed so that the beat component may not be included in the line voltage of the inverter output.

That is to say, in the one – pulse region, the carrier having the inverter frequency is compared with the modulated wave having the beat frequency and a minute amplitude to generate pulses. Thereby, the beat component can be removed.

Further, in the multipulse region, the beat removing component should be superposed on the modulated wave for outputting the fundamental wave.

A problem posed here is how to generate the beat removing component (having the same frequency as the beat frequency). Two conceivable techniques are as follows:

① the beat frequency component contained in the output voltage of the inverter is detected; and

② the motor current is measured to detect the beat frequency component. If the inverter frequency changes, however, the beat frequency changes along with it. When the technique 1 is used, therefore, it is difficult to constitute a filter for taking out only the beat frequency component. Further, it is desirable to detect the beat component as voltage. Therefore, it is also difficult to use the technique ② whereby the beat component is detected on the basis of the motor impedance which changes with the frequency.

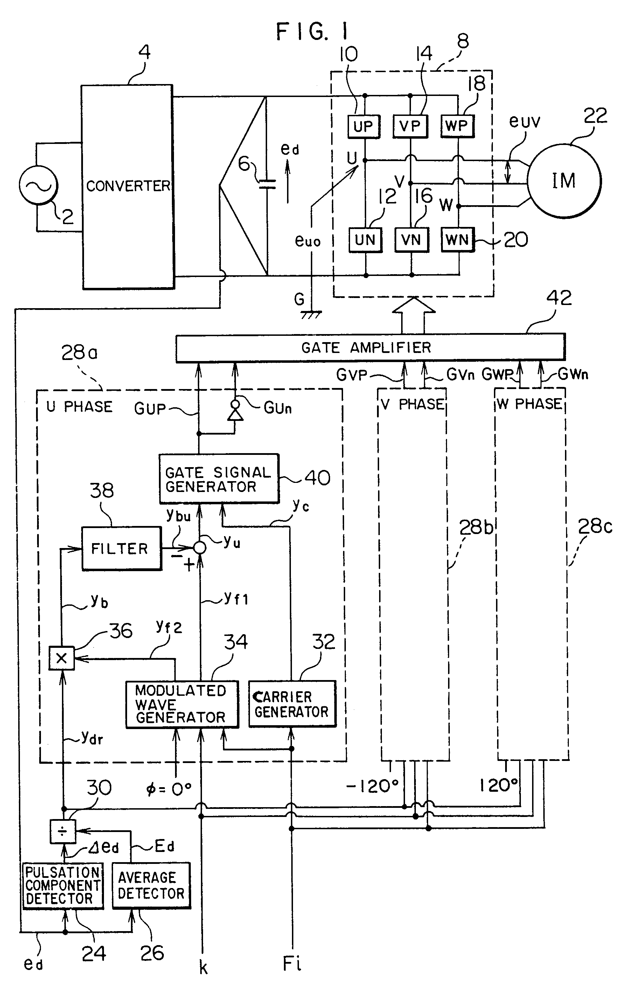

Concrete means will hereafter be described by referring to Fig. 1.

In Fig. 1, numeral 2 denotes a single – phase AC power pource, 4 a converter for converting AC into DC, 6 a smoothing capacitor, and 8 an inverter for converting DC into AC having a variable voltage and a variable frequency. Numerals 10, 12, 14, 16, 18 and 20 denote switching devices UP to WN, respectively. Numeral 22 denotes an induction motor, 24 a pulsation component detector, and 26 an average detector. Numeral 28a denotes a pulse width modulation circuit. The pulse width modulation circuit 28a receives a signal ydr obtained by dividing an output $\Delta$ed of the pulsation component detector 24 by an output $E_d$ of the average detector 26 in a divider 30, a modulation degree command k, and an inverter frequency command Fi. The pulse width modulation circuit 28a calculates and produces gate signals $G_{up}$ and $G_{un}$ for

controlling the turning on and off of the switching devices 10 and 12 of U phase.

The pulse width modulation circuit 28a comprises a carrier generator 32 responsive to the inverter frequency command Fi for outputting a triangular wave signal having a predetermined frequency, a modulated wave generator 34 supplied with the modulation degree command k, the inverter frequency command Fi and the initial phase $\phi$ to generate two sine wave signals yfi and yf2 having the inverter frequency, a filter 38 supplied with a signal yb obtained by multiplying one output yf2 of the modulated wave generator 34 and the output ydr of the divider 30 in a multiplier 36 to detect only a low frequency component ybu, and a gate signal generator 40 supplied with a difference yu between the other output yf1 and the output ybu of the filter 38 and an output yc of the carrier generator 32 to generate the gate signals $G_{up}$ and $G_{un}$ respectively of the upper and lower arms of U phase. The pulse width modulation circuit 28a thus produces the gate signals of U phase.

On the other hand, pulse width modulation circuits 28b and 28c respectively generate gate signals $G_{vp}$ and $G_{vn}$ of V phase and gate signals $G_{wp}$ and $G_{wn}$ of W phase, and have the same configuration as that of 28a, respectively. Further, numeral 42 denotes gate amplifiers for amplifying gate signals respectively outputted from 28a, 28b and 28c and for driving the switching devices 10 and 12, 14 and 16, and 18 and 20, respectively.

In each of the pulse width modulation circuits 28a, 28b and 28c in the present embodiment, it is possible to suppress harmonics generated in the gate signal to the minimum.

Operation in the one−pulse mode will now be described.

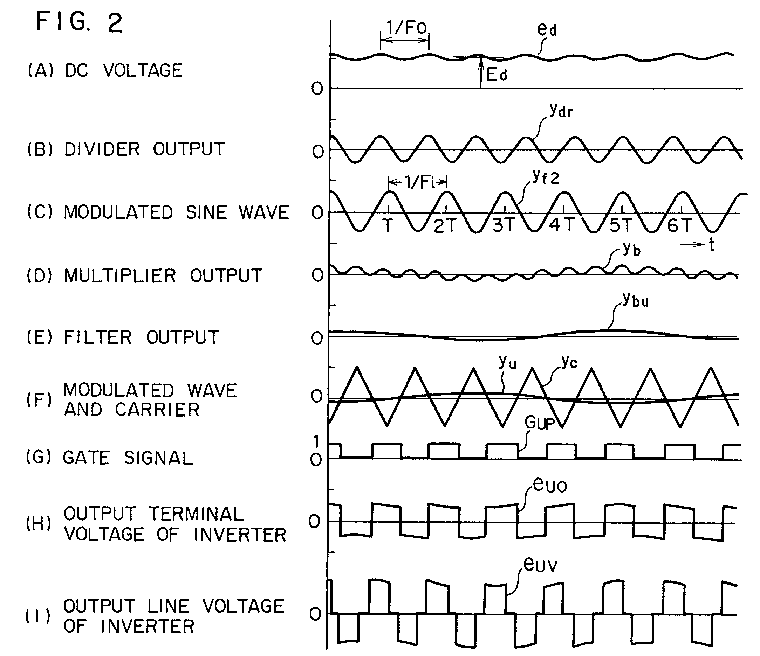

The signal ydr obtained by dividing the pulsation $\Delta$ed of the DC voltage by the average value $E_d$ and shown in Fig. 2(B) is multiplied by the modulated sine wave yf2 having the inverter frequency produced by the modulated wave generator 34 and shown in Fig. 2(C). The signal yb containing frequency components corresponding to the difference and sum of the pulsation frequency and the inverter frequency is produced as shown in Fig. 2(D). The filter 38 cuts off the high frequency components of this signal and passes only the low frequency component ybu. The beat component having a predetermined amplitude and a predetermined phase is produced as shown in Fig. 2(E).

The gate signal generator 40 compares the modulated wave yu with the carrier yc and generates the gate signal represented as follows.

$$ G_{up} = \left[ \begin{array}{l} 1 \ (yu > yc) \\ 0 \ (yu < yc) \end{array} \right. \qquad \dots\dots\dots\dots (14) $$

By using a signal obtained by inverting the output ybu of the filter 38 as the modulated wave yu and using a triangular wave having a frequency identical with the inverter frequency as the carrier as shown in Fig. 2−(F), it becomes possible to provide a beat component with little change in fundamental wave even in the one−pulse mode as shown in Fig. 2(G). By adjusting yf2, therefore, the beat component can be removed from the output terminal voltage of the inverter. At this time, the other output of the modulated wave generator 34 must be defined as yf1 = 0. In the one pulse region, however, there is not especially a problem. It can be easily guessed from Fig. 2 that operation similar to that of the prior art is possible even when pulsation is absent.

In order to remove the beat component from the inverter output voltage, the amplitude of the output yf2 of the modulated wave generator 34 must be set at $4/\pi$.

Operation in the multipulse mode will now be described.

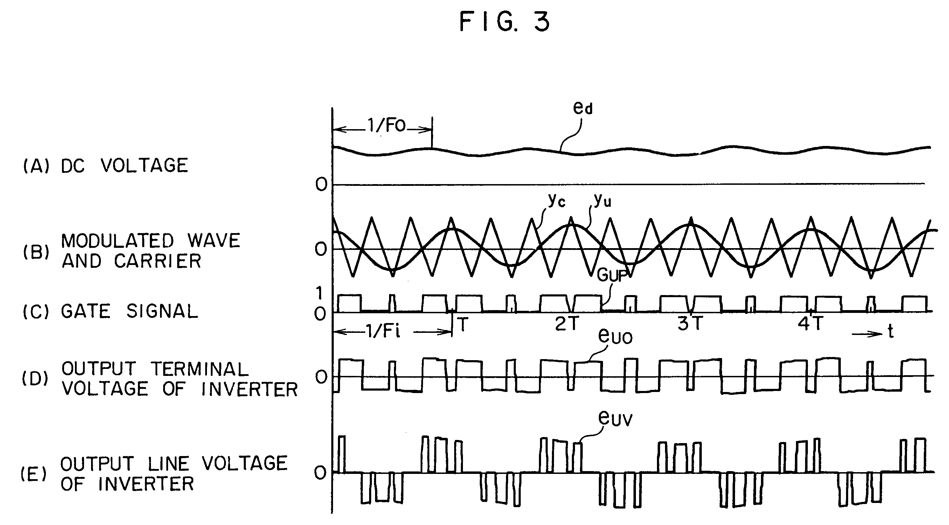

The operation is the same as that in the one−pulse mode as far as the production of the beat component ybu. Waveforms at respective portions become as shown in Fig. 2(B) to (E). In case of the multipulse mode, the pulse width can be adjusted by using the degree of modulation unlike the case of one−pulse mode. Therefore, the difference between the modulated sine wave yf1 having a degree of modulation k proportionate to the output power of the inverter frequency to be obtained and the signal ybu of the beat component to be included in the above described gate signal is derived. As the modulated wave yu, the resultant difference is compared with the triangular wave carrier as shown in Fig. 3(B). (Fig. 3 shows an example in 3−pulse mode.) As a result, the gate signal (Fig. 3(C)) having a predetermined fundamental wave and the beat component is produced. And the beat component is removed from the output terminal voltage of the inverter as shown in Fig. 3(D) and (E). Therefore, the beat component is removed from the line voltage as well.

8

In the multipulse mode, the other output yf2 of the modulated wave generator 34 must be so set that it may be equal to yf1 and have an amplitude of k (where k is degree of modulation).

The filter 38 of Fig. 1 will now be described.

The component yb, which is the product of the inverter frequency yf2 and the degree ydr of pulsation (which refers to ripple factor in this case and which is equal to the quotient of the pulsation amplitude divided by the average of DC voltage) of DC output voltage of the converter 4, is sideband components (as represented by the second and third terms of the right side of the equation (8)) with respect to the fundamental wave component. As described before, the component of a frequency equivalent to the difference between the pulsation frequency and the inverter frequency is the beat component. Therefore, any filter capable of taking out only the beat component can be used as the filter 38.

For example, a low−pass filter passing only frequencies ranging from DC to approximately 20 Hz can be used.

For producing a train of pulses, any modulated wave is not used in the one−pulse mode whereas a modulated wave is used in the multipulse mode. Switching means may also be used.

As heretofore described, the present invention makes it possible to remove a beat component from the inverter output voltage in the one−pulse region, not to mention the multipulse region. Therefore, the beat can be suppressed over the entire region of the operation frequency irrespective of the number of pulses, resulting in an effect.

Further, since low−frequency undulation of inverter output voltage which might cause a beat is removed, the following effects can be obtained.

① A current increase in main circuit switching devices caused by the beat in motor current can be suppressed.

② Since the pulsation of torque caused by the beat can be suppressed, the induction motor can be run smoothly.

③ The capacitance of the smoothing capacitor of a DC stage can be reduced.

## Claims

1. A frequency changer including a converter (4) for converting AC to DC and an inverter (8) for converting an output of said converter to AC having a variable voltage and a variable frequency, said frequency changer comprising:

   carrier generation means (32) for generating a carrier (yc) having a frequency equivalent to integer times that of an output frequency command (Fi) of said inverter (8),

   first modulated wave generation means (34) for generating a modulated wave (yf1, yf2) based upon said frequency command (Fi) and an output voltage command (k) of said inverter (8),

   means (36, 38) for generating, on the basis of said modulated wave (yf2) and degree (ydr) of pulsation of DC resulting from conversion in said converter (4), a second modulated wave (yu) containing a component (ybu) having a frequency equivalent to the difference between the frequency of the pulsation and an output frequency of said inverter (8), and

   pulse width modulation means (40) for generating, on the basis of the output (yc) of said carrier generation means (32) and said second modulated wave (yu), a train of pulses ($G_{up}$ to $G_{wn}$) for driving said inverter (8).

2. A frequency changer according to Claim 1, wherein said degree (ydr) of pulsation of DC comprises a ripple factor obtained by dividing the amplitude ($\Delta ed$) of pulsation of the output voltage of said converter (4) by an average ($E_d$) of the output voltage.

3. A frequency changer according to Claim 1, wherein in case of a one−pulse mode in which the number of pulses contained in a half cycle of the output voltage of said inverter (8) is unity, said second modulated wave (yu) comprises a modulated wave obtained by inverting the polarity of a component (ybu) having a frequency corresponding to the difference between said pulsation frequency and the output frequency of said inverter (8).

4. A frequency changer according to Claim 1, wherein in case of a multipulse mode in which multiple pulses are contained in a half cycle, said second modulated wave (yu) comprises a modulated wave equivalent to sum of said first modulated wave (yf1) and a modulated wave obtained by inverting the polarity of a component (ybu) having a frequency corresponding to the difference between said pulsation frequency and the output frequency of said inverter (8).

5. A frequency changer according to Claim 1, wherein said carrier generation means (32) generates said carrier (yc) with the same frequency as that specified by an inverter output frequency command (Fi) in case of a one−pulse mode in which the number of pulses contained in a half cycle of the output voltage of said inverter (8) is unity.

6. A frequency changer according to Claim 1, wherein said carrier generation means (32) generates said carrier (yc) with a frequency equivalent to integer times that specified by an output frequency command (Fi) of the inverter (8) in case of a multipulse mode in which multiple pulses are contained in a half cycle of the output voltage of said inverter (8).

7. A frequency changer according to Claim 1, wherein said pulse width modulation means (40) generates, said train of pulses (GUp to GWn) on the basis of the output (yc) of said carrier generation means (32) and said difference frequency component (ybu), in case of a one−pulse mode in which the number of pulses contained in a half cycle of the output voltage of said inverter (8) is unity, and on the basis of a difference between said modulated wave (yf1) and said difference frequency component (Ybu) as well as said carrier (yc) in case of a multipulse mode in which multiple pulses are contained in a half cycle.

8. A frequency changer according to claim 7, further comprising:
   means for detecting the voltage of said DC;
   means (24) for calculating the pulsation amplitude from said DC voltage;
   means (26) for calculating an average of said DC voltage; and
   a divider (30) for diving the amplitude by the average;
   and wherein said detecting means (36, 38) includes
   a multiplier (36) for multiplying said modulated wave (yf2) with the output (ydr) of said divider (30); and
   a filter (38) for extracting said difference frequency component (ybu) from the output (yb) of said multiplier (36).

9. A frequency changer according to Claim 8, wherein said filter (38) comprises a low−pass filter.

10. A frequency changer including a converter (4) for converting AC to DC and an inverter (8) for converting the output of said converter to AC having a variable voltage and a variable frequency, said frequency changer comprises a difference frequency component detection apparatus which comprises:
   means (24, 26, 30) for detecting the degree of DC pulsation outputted by said converter (4);
   means (34) for generating a modulated wave (yf1, yf2) on the basis of an output frequency command (Fi) and on the basis of an output command voltage (k) issued to said inverter (8); and
   means (36, 38) for generating a component (ybu) having a frequency equivalent to the difference between said pulsation frequency and the output frequency of said inverter (8), on the basis of the output (ydr) of said pulsation degree detection means (24, 26, 30) and on the basis of said modulated wave (yf2).

11. A frequency changer according to claim 10 wherein said means (36, 38) for generating a component (ybu) having a frequency equivalent to the difference between said pulsation frequency and the output frequency of said inverter (8) comprises:
   means (36) for multiplying the output (ydr) of said pulsation degree detection means (24, 26, 30) with said modulated wave (yf2); and
   a filter (38) for extracting the difference frequency component (ybu) between said pulsation frequency and the output frequency of said inverter (8) out of the output of said multiplying means (36).

**Patentansprüche**

1. Frequenzwandler mit einem Gleichrichter (4) zum Umrichten von Wechselstrom in Gleichstrom und einem Wechselrichter (8) zum Umrichten eines Ausgangs des Gleichrichters in Wechselstrom variabler Spannung und variabler Frequenz, wobei der Frequenzwandler umfaßt:
   eine Träger−Erzeugungseinrichtung (32) zur Erzeugung eines Trägers (yc) mit einer Frequenz, die zu einem ganzzahligen Vielfachen der Ausgangs−Sollfrequenz (Fi) des Wechselrichters (8) äquivalent ist,

10

eine erste Modulationswellen − Erzeugungseinrichtung (34) zur Erzeugung einer modulierten Welle (yf1, yf2) aufgrund der Sollfrequenz (Fi) und einer Ausgangs − Sollspannung (k) des Wechselrichters (8),

eine Einrichtung (36, 38), die aufgrund der modulierten Welle (yf2) und dem Maß (ydr) der Pulsation des aus der Umrichtung in dem Gleichrichter (4) resultierenden Gleichstroms eine zweite modulierte Welle (yu) erzeugt, die eine Komponente (ybu) mit einer Frequenz enthält, die zu der Differenz zwischen der Pulsationsfrequenz und einer Ausgangsfrequenz des Wechselrichters (8) äqui − valent ist, und

eine Pulsbreiten − Moduliereinrichtung (4), die aufgrund des Ausgangs (yc) der Träger − Erzeu − gungseinrichtung (32) und der zweiten modulierten Welle (yu) einen Impulszug ($G_{up}$ bis $G_{wn}$) zur Ansteuerung des Wechselrichters (8) erzeugt.

2. Frequenzwandler nach Anspruch 1, wobei das Pulsationsmaß (ydr) des Gleichstroms einen Wellig − keitsfaktor umfaßt, der durch Dividieren der Pulsationsamplitude ($\Delta ed$) der Ausgangsspannung des Gleichstroms einen Welligkeitsfaktor umfaßt, der durch Dividieren der Amplitude ($\Delta ed$) der Ausgangs − gleichspannung des Gleichrichters (4) durch einen Mittelwert ($E_d$) der Ausgangsspannung erhalten ist.

3. Frequenzwandler nach Anspruch 1, wobei im Falle einer Einpuls − Mode, bei der in einem Halbzyklus der Ausgangsspannung des Wechselrichters (8) ein Impuls vorliegt, die zweite modulierte Welle (yu) eine modulierte Welle umfaßt, die durch Invertieren der Polarität einer Komponente (ybu) mit einer der Differenz zwischen der Pulsationsfrequenz und der Ausgangsfrequenz des Wechselrichters (8) ent − sprechenden Frequenz erhalten ist.

4. Frequenzwandler nach Anspruch 1, wobei im Falle einer Mehrpuls − Mode, bei der in einem Halbzyklus mehrere Impulse vorliegen, die zweite modulierte Welle (yu) eine modulierte Welle umfaßt, die zu der Summe aus der ersten modulierten Welle (yf1) und einer modulierten Welle äquivalent ist, die durch Invertieren der Polarität einer Komponente (ybu) mit einer der Differenz zwischen der Pulsationsfre − quenz und der Ausgangsfrequenz des Wechselrichters (8) entsprechenden Frequenz äquivalent ist.

5. Frequenzwandler nach Anspruch 1, wobei die Träger − Erzeugungseinrichtung (32) den Träger (yc) mit der gleichen Frequenz erzeugt, wie sie von einer Wechselrichter − Ausgangssollfrequenz (Fi) im Falle einer Einpuls − Mode vorgegeben ist, bei der in einem Halbzyklus der Ausgangsspannung des Wech − selrichters (8) ein Impuls vorliegt.

6. Frequenzwandler nach Anspruch 1, wobei die Träger − Erzeugungseinrichtung (32) den Träger (yc) mit einer Frequenz erzeugt, die zu einem ganzzahligen Vielfachen einer Ausgangs − Sollfrequenz (Fi) des Wechselrichters (8) im Falle einer Mehrpuls − Mode äquivalent ist, bei der in einem Halbzyklus der Ausgangsspannung des Wechselrichters (8) mehrere Impulse vorliegen.

7. Frequenzwandler nach Anspruch 1, wobei die Impulsbreiten − Moduliereinrichtung (40) den Impulszug ($G_{up}$ bis $G_{wn}$) im Falle einer Einpuls − Mode, bei der in einem Halbzyklus der Ausgangsspannung des Wechselrichters (8) ein Impuls vorliegt, aufgrund des Ausgangssignals (yc) der Träger − Erzeugungs − einrichtung (32) und der Differenzfrequenzkomponente (ybu) und im Falle einer Mehrpuls − Mode, bei der in einem Halbzyklus mehrere Impulse vorliegen, aufgrund einer Differenz zwischen der modulierten Welle (yf1) und der Differenzfrequenzkomponente (ybu) sowie des Trägers (yc) erzeugt.

8. Frequenzwandler nach Anspruch 7, ferner umfassend
eine Einrichtung zur Erfassung der Spannung des Gleichstroms,
eine Einrichtung (24) zur Berechnung der Pulsationsamplitude der Gleichspannung,
eine Einrichtung (26) zum Berechnen eines Mittelwerts der Gleichspannung, und
eine Dividiereinrichtung (30) zum Dividieren der Amplitude durch den Mittelwert;
und wobei die Erfassungseinrichtung (36, 38) enthält:
eine Multipliziereinrichtung (36) zum Multiplizieren der modulierten Welle (yf2) mit dem Ausgang (ydr) der Dividiereinrichtung (30), und
ein Filter (38) zum Extrahieren der Differenzfrequenzkomponente (ybu) aus dem Ausgang (yb) der Multipliziereinrichtung (36).

9. Frequenzwandler nach Anspruch 8, wobei das Filter (38) ein Tiefpaßfilter umfaßt.

**10.** Frequenzwandler mit einem Gleichrichter (4) zum Umrichten von Wechselstrom in Gleichstrom und einem Wechselrichter (8) zum Umrichten des Ausgangs des Gleichrichters in Wechselstrom variabler Spannung und variabler Frequenz, wobei der Frequenzwandler eine Einrichtung zur Erfassung einer Differenzfrequenzkomponente aufweist, die umfaßt:

eine Einrichtung (24, 26, 30) zum Erfassung des Maßes der von dem Gleichrichter (4) ausgegebe − nen Gleichstrompulsation,

eine Einrichtung (34) zur Erzeugung einer modulierten Welle (yf1, yf2) aufgrund einer Ausgangs − Sollfrequenz (Fi) sowie aufgrund einer an den Wechselrichter (8) abgegebenen Ausgangs − Sollspan − nung (k), und

eine Einrichtung (36, 38), die aufgrund des Ausgangssignals (ydr) der Einrichtung (24, 26, 30) zur Erfassung des Pulsationsmaßes sowie aufgrund der modulierten Welle (yf2) eine Komponente (ybu) mit einer Frequenz erzeugt, die zu der Differenz zwischen der Pulsationsfrequenz und der Ausgangsfre − quenz des Wechselrichters (8) äquivalent ist.

**11.** Frequenzwandler nach Anspruch 10, wobei die Einrichtung (36, 38) zur Erzeugung einer Komponente (ybu) mit einer Frequenz, die zu der Differenz zwischen der Pulsationsfrequenz und der Ausgangsfre − quenz des Wechselrichters (8) äquivalent ist, umfaßt:

eine Einrichtung (36) zum Multiplizieren des Ausgangssignals (ydr) der Pulsationsmaß − Erfas − sungseinrichtung (24, 26, 30) mit der modulierten Welle (yf2), und

ein Filter (38), das die Differenzfrequenzkomponente (ybu) zwischen der Pulsationsfrequenz und der Ausgangsfrequenz des Wechselrichters (8) aus dem Ausgangssignal der Multipliziereinrichtung (36) extrahiert.

**Revendications**

**1.** Changeur de fréquence comprenant un convertisseur (4) servant à convertir un courant alternatif en un courant continu et un onduleur (8) pour convertir un signal de sortie dudit convertisseur en un courant alternatif possédant une tension variable et une fréquence variable, ledit changeur de fréquence comprenant :

des moyens (32) de production de porteuse servant à produire une porteuse (yc) possédant une fréquence équivalente à un multiple entier de celle d'une commande de fréquence de sortie (Fi) dudit onduleur (8),

des premiers moyens (34) de production d'onde modulée servant à produire une onde modulée (yf1, yf2) sur la base de ladite commande de fréquence (Fi) et d'une commande (k) de la tension de sortie dudit onduleur (8),

des moyens (36,38) pour produire, sur la base de ladite onde modulée (yf2) et d'un degré (ydr) de pulsation du courant continu résultant de la conversion exécutée dans ledit convertisseur (4), une seconde onde modulée (yu) contenant une composante (ybu) possédant une fréquence équivalente à la différence entre la fréquence de la pulsation et une fréquence de sortie dudit onduleur (8), et

des moyens (40) de modulation d'impulsions en durée pour produire, sur la base du signal de sortie (yc) desdits moyens (32) de production de porteuse et de ladite seconde onde modulée (yu), un train d'impulsions ($G_{up}$ à $G_{wn}$) pour commander ledit onduleur (8).

**2.** Changeur de fréquence selon la revendication 1, dans lequel ledit degré (ydr) de pulsation du courant continu comprend un facteur d'ondulation obtenu en divisant l'amplitude ($\Delta ed$) de pulsation de la tension de sortie dudit convertisseur (4) par une moyenne ($E_d$) de la tension de sortie.

**3.** Changeur de fréquence selon la revendication 1, dans lequel, dans le cas d'un mode à une seule impulsion, dans lequel le nombre des impulsions contenues dans une alternance de la tension de sortie dudit onduleur (8) est égal à un, ladite seconde onde modulée (yu) comprend une onde modulée obtenue par inversion de la polarité d'une composante (ybu) possédant une fréquence correspondant à la différence entre ladite fréquence de pulsation et ladite fréquence de sortie dudit onduleur (8).

**4.** Changeur de fréquence selon la revendication 1, dans lequel, dans le cas d'un mode à impulsions multiples, dans lequel de multiples impulsions sont contenues dans une alternance, ladite seconde onde modulée (yu) comprend une onde modulée équivalente à la somme de ladite première onde modulée (yf1) et d'une onde modulée obtenue par inversion de la polarité d'une composante (ybu) possédant une fréquence correspondant à la différence entre ladite fréquence de pulsation et la

12

EP 0 353 715 B1

fréquence de sortie dudit onduleur (8).

**5.** Changeur de fréquence selon la revendication 1, dans lequel lesdits moyens (32) de production de porteuse produisent ladite porteuse (yc) avec la même fréquence que celle spécifiée par une commande (Fi) de fréquence de sortie de l'onduleur, dans le cas d'un mode à une seule impulsion, lors duquel le nombre des impulsions contenues dans une alternance de la tension de sortie dudit onduleur (8) est égal à un.

**6.** Changeur de fréquence selon la revendication 1, dans lequel lesdits moyens (32) de production de la porteuse produisent ladite porteuse (yc) avec une fréquence équivalente à un nombre multiple entier de celle spécifiée par une commande de fréquence de sortie (Fi) de l'onduleur (8) dans le cas d'un mode à impulsions multiples, lors duquel de multiples impulsions sont contenues dans une alternance de la tension de sortie dudit onduleur (8).

**7.** Changeur de fréquence selon la revendication 1, dans lequel lesdits moyens (40) de modulation d'impulsions en durée produisent ledit train d'impulsions (Gup à Gwn) sur la base du signal de sortie (yc) desdits moyens (32) de production de porteuse et sur la base de ladite composante de fréquence différentielle (ybu), selon lequel le nombre des impulsions contenues dans une alternance de la tension de sortie dudit onduleur (8) est égal à un, et sur la base d'une différence entre ladite onde modulée (yf1) et ladite composante de fréquence différentielle (ybu) ainsi que sur la base de ladite porteuse (yc) dans le cas d'un mode à impulsions multiples dans lequel des multiples impulsions sont contenues dans une alternance.

**8.** Changeur de fréquence selon la revendication 7, comportant en outre :
un moyen pour détecter la tension dudit courant continu;
des moyens (24) pour calculer l'amplitude de pulsation à partir de ladite tension continue;
des moyens (26) pour calculer une moyenne de ladite tension continue; et
un diviseur (30) pour diviser l'amplitude par la moyenne;
et dans lequel lesdits moyens de détection (36,38) comprennent
un multiplicateur (36) pour multiplier ladite onde modulée (yf2) par le signal de sortie (ydr) dudit diviseur (30), et
un filtre (38) pour extraire ladite composante de fréquence différentielle (ybu) à partir du signal de sortie (yb) dudit multiplicateur (36).

**9.** Changeur de fréquence selon la revendication 8, dans lequel ledit filtre (38) comprend un filtre passe-bas.

**10.** Changeur de fréquence comprenant un convertisseur (4) pour convertir un courant alternatif en un courant continu et un onduleur (8) pour convertir le signal de sortie du convertisseur en un courant alternatif possédant une tension variable et une fréquence variable, ledit changeur de fréquence comprenant un dispositif de détection de composante de fréquence différentielle, qui comprend :
des moyens (24,26,30) pour détecter le degré de pulsation du courant continu délivré par ledit convertisseur (4);
des moyens (34) pour produire une onde modulée (yf1, yf2) sur la base d'une commande de fréquence de sortie (Fi) et sur la base d'une tension de commande de sortie (k) envoyée audit onduleur (8); et
des moyens (36, 38) pour fournir une composante (ybu) possédant une fréquence équivalente à la différence entre ladite fréquence de pulsation et la fréquence de sortie dudit onduleur (8), sur la base du signal de sortie (ydr) desdits moyens (24,26,30) de détection du degré de pulsation et sur la base de ladite onde modulée (yf2).

**11.** Changeur de fréquence selon la revendication 10, dans lequel lesdits moyens (36, 38) servant à produire une composante (ybu) possédant une fréquence équivalente à la différence entre ladite fréquence pulsatoire et la fréquence de sortie dudit onduleur (8) comprennent :
des moyens (36) pour multiplier le signal de sortie (ydr) desdits moyens (24, 26, 30) de détection du degré de pulsation par ladite onde modulée (yf2); et
un filtre (38) pour extraire la composante de fréquence différentielle (ybu) entre ladite fréquence pulsatoire et la fréquence de sortie dudit onduleur (8) à partir du signal de sortie desdits moyens

13

multiplicateurs (36).

FIG. I

# F I G. 2

(A) DC VOLTAGE

(B) DIVIDER OUTPUT

(C) MODULATED SINE WAVE

(D) MULTIPLIER OUTPUT

(E) FILTER OUTPUT

(F) MODULATED WAVE AND CARRIER

(G) GATE SIGNAL

(H) OUTPUT TERMINAL VOLTAGE OF INVERTER

(I) OUTPUT LINE VOLTAGE OF INVERTER

EP 0 353 715 B1

# FIG. 3

(A) DC VOLTAGE

$e_d$

$\leftarrow 1/F_0 \rightarrow$

O

(B) MODULATED WAVE AND CARRIER

$y_c$  $y_u$

O

(C) GATE SIGNAL

GUP

1
O

$\leftarrow 1/F_i \rightarrow$ T    2T    3T    4T    $\rightarrow t$

(D) OUTPUT TERMINAL VOLTAGE OF INVERTER

$e_{uo}$

O

(E) OUTPUT LINE VOLTAGE OF INVERTER

$e_{uv}$

O

EP 0 353 715 B1

# FIG. 4

(A)
IN CASE
Fi << Fo

(a) DC VOLTAGE

Ed          Eo

$(ed = Ed + Eo \cos(wot + \phi o))$

(b) INVERTER OUTPUT VOLTAGE (LINE VOLTAGE)

Ed

(B)
IN CASE
Fi ≒ Fo

(a) DC VOLTAGE

Ed     Eo

(b) INVERTER OUTPUT VOLTAGE (LINE VOLTAGE)

Ed

(C)
IN CASE
Fi >> Fo

(a) DC VOLTAGE

Ed      Eo

(b) INVERTER OUTPUT VOLTAGE (LINE VOLTAGE)

Ed

120°

$1/f(=1/fo)$

## F I G. 5

## F I G. 6

# F I G. 7

| SWITCHING FUNCTION<br>Su, Sv, Sw | | 1 | O |
|---|---|---|---|
| CONDUCTION STATE | UPPER ARM<br>UP, VP, WP | ON | OFF |
| | LOWER ARM<br>UN, VN, WN | OFF | ON |
| GATE SIGNAL | UPPER ARM<br>GUP, GVP, GWP | 1 | O |
| | LOWER ARM<br>Gun, Gvn, Gwn | O | 1 |